Europäisches Patentamt

(19) European Patent Office

Office européen des brevets

(11) Veröffentlichungsnummer: **0 126 398**
**A1**

## (12) EUROPÄISCHE PATENTANMELDUNG

(21) Anmeldenummer: 84105371.3

(51) Int. Cl.³: **H 04 L 25/49**

(22) Anmeldetag: 11.05.84

(30) Priorität: 16.05.83 DE 3317757

(43) Veröffentlichungstag der Anmeldung: 28.11.84
Patentblatt 84/48

(84) Benannte Vertragsstaaten: **AT BE CH DE FR GB IT LI NL SE**

(71) Anmelder: **Siemens Aktiengesellschaft, Berlin und München Wittelsbacherplatz 2, D-8000 München 2 (DE)**

(72) Erfinder: **Krause, Heinz, Ing.grad., Nordendstrasse 115, D-8080 Emmering (DE)**
Erfinder: **Smolka, Georg, Dipl.-Ing., Frühlingstrasse 33, D-8150 Holzkirchen (DE)**
Erfinder: **Zettl, Gerhard, Dipl.-Ing., Zypressenweg 9, D-8011 Kirchheim (DE)**

(54) **Schaltungsanordnung zur Übertragung von digitalen, nach dem AMI-Code codierten Signalen.**

(57) Vom Sendeverstärker werden vorcodierte Signale auf ein Übertragungskabel über ein impulsformendes Netzwerk übertragen. Das impulsformende Netzwerk bewerkstelligt die Umformung in ein AMI-codiertes Signal und ist als überbrücktes T-Glied ausgebildet, dessen Querzweig eine kurzgeschlossene Stichleitung und dessen Überbrückungszweig eine leerlaufende Überbrückungsleitung enthält. Der Eingangswiderstand dieser beiden Leitungen ist jeweils zueinander dual. Das überbrückte T-Glied ist so bemessen, daß es die für den AMI-Code vorgegebene Impulsformung erzeugt. Niederfrequente Signale, die vom Signalkabel kommen und die von auf dem Signalkabel wirksamen Blitzen erzeugt werden, werden in dem dem Kabel zugewandten ohmschen Wirkwiderstand verbraucht. Zusätzliche Maßnahmen zur Blitzunterdrückung wie beispielsweise Schutzdioden, sind nicht mehr erforderlich.

0126398

SIEMENS AKTIENGESELLSCHAFT

Berlin und München

VPA 83 P 1 3 4 1 E

Schaltungsanordnung zur Übertragung von digitalen, nach dem AMI-Code codierten Signalen

Die Erfindung betrifft eine Schaltungsanordnung zur Übertragung von digitalen, nach dem AMI-Code (Alternate Mark Inversion) codierten Signalen, bestehend aus einem Sendeverstärker, einem impulsformenden Netzwerk und einem der Signalübertragung dienenden Kabel.

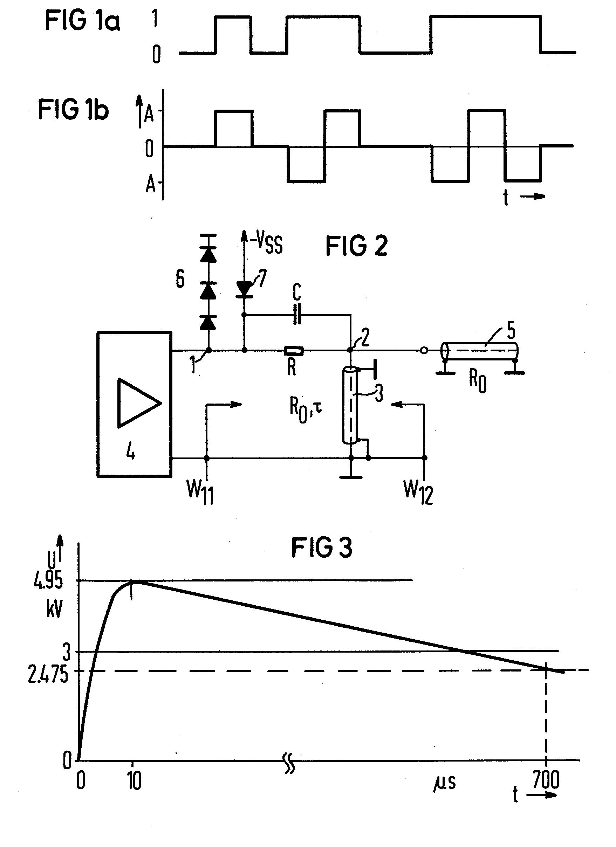

Schaltungsanordnungen dieser Art sind aus der Zeitschrift "Nachrichtentechnische Zeitung" 32, 1979, 9, Seiten 608 bis 611 bereits bekanntgeworden und werden anhand der Fig. 2 noch genauer besprochen. Bei solchen Schaltungen läßt es sich bekanntlich nicht vermeiden, daß vom Signalkabel auch Blitzimpulse übertragen werden und somit erhebliche Überspannungen auf den vorgeschalteten Sendeverstärker einwirken, wodurch dieser zerstört würde. Es sind deshalb auch in der vorgenannten Literaturstelle Schutzdioden vorgesehen, um die Wirkung der Überspannungen zu beseitigen. Der Erfindung zugrunde liegende Untersuchungen haben jedoch gezeigt, daß diese Überspannungsimpulse noch zu groß sind einerseits, und daß andererseits derzeit nicht immer geeignete Schaltelemente zur Verfügung stehen, die in der Lage sind, diese Überspannungsimpulse zuverlässig und sicher abzuleiten.

Aufgabe der Erfindung ist es, eine Schaltung anzugeben, die die für den AMI-Code erforderliche Impulsformung vornimmt und die zugleich auch die von Blitzeinschlägen oder Schaltvorgängen in Starkstromnetzen herrührende Überspannung aufnimmt, ohne daß weitere Schaltelemente erforderlich sind.

11.5.83/Hka 1 Seu

0126398

Ausgehend von einer Schaltungsanordnung der einleitend genannten Art wird diese Aufgabe gemäß der Erfindung in der im kennzeichnenden Teil des Patentanspruches 1 angegebenen Weise gelöst.

Im Patentanspruch 2 ist eine vorteilhafte Ausgestaltung angegeben.

Anhand von Ausführungsbeispielen wird nachstehend die Erfindung noch näher erläutert.

Es zeigen in der Zeichnung

Fig. 1a die zu übertragenden Daten;

Fig. 1b ein Signal gemäß dem AMI-Code wie dies aus der Literaturstelle Telcom Report 2/79, Beiheft "Digitale Übertragungstechnik", Seiten 176 bis 191 bekannt ist;

Fig. 2 eine Schaltungsanordnung für die Impulsformung gemäß dem AMI-Code und Überspannungsschutz nach dem Stand der Technik;

Fig. 3 die Leerlaufspannungen eines Prüfimpulsgenerators, der in gewisser Weise eine Nachbildung einer von einem Blitzeinschlag herrührenden Überspannung darstellt;

Fig. 4 eine erfindungsgemäße Schaltung zur Impulsformung gemäß dem AMI-Code und dem zugehörigen Überspannungsschutz;

Fig. 5 eine Ausgestaltung von Fig. 4, bei der zur Impulsformung Schaltungsabschnitte aus konzentrierten Schaltelementen verwendet sind.

Zum besseren Verständnis sei anhand der Figuren 1 und 2 der Stand der Technik noch kurz erläutert.

Bei Sendeverstärkern von Regeneratoren in digitalen Übertragungssystemen, die den in Fig. 1 gezeigten AMI (Alternating Mark Inversion)-Code verwenden (Telcom-report),

0126398

Netzwerk zur Impulsformung und, insbesondere bei der Realisierung des Verstärkers mit Hilfe von Halbleiterbauelementen, eine Schutzanordnung gegen Überspannungen zwischen Innen- und Außenleiter der Koaxialleitungen benötigt. Die bisherige Lösung nach der Zeitschrift Nachrichtentechnische Zeitung, S. 608 bis 611, zeigt Fig. 2 Die Impulsformung gemäß dem AMI-Code wird mittels einer einseitig kurzgeschlossenen Stichleitung durchgeführt. Die zeitliche Pulslänge wird durch die Länge der Leitung bestimmt.

In Fig. 2 ist noch erkennbar ein Sendeverstärker 4, dessen Signal auf das Signalkabel 5 mit dem Wellenwiderstand $R_0$ übertragen werden muß. Die kurzgeschlossene Leitung 3 ist dem Signalkabel 5 vorgeschaltet, des weiteren liegt zwischen dem Sendeverstärker 4 und dem kurzgeschlossenen Kabel noch die Parallelschaltung aus einem Widerstand R und einem Kondensator C im Längszweig einer Vierpolschaltung. Am Ausgang des Sendeverstärkers 4 liegen Schutzdioden 6, deren Durchlaßrichtung auf Bezugspotential zielt. Entgegengesetzt hierzu liegt eine Schutzdiode 7 an der Versorgungsspannung $V_{SS}$. Der linksseitige Eingangswiderstand dieser Vierpolschaltung ist mit $W_{11}$ bezeichnet, der ausgangsseitige Eingangswiderstand mit $W_{12}$.

Am Eingang der Stichleitung 3 auftretende Überspannungen werden durch Überlagerung von hin- und rücklaufender Welle abgebaut. Dies bedeutet, daß bei einem auf 3 kV begrenzten Prüfimpuls gemäß Fig. 3 an Knoten 2 in Fig. 2 eine Restspannung von etwa $U_2 \geq 150$ V bleibt. Die Spannung $U_2$ wird mit Hilfe eines zusätzlichen Widerstandes R und mit den Schutzdioden 6,7 die Ströme bis zu 20 A aufnehmen müssen, auf $U_1 \leq 10$ V an Knoten 1 verringert. Bisher sind nur Dioden bekannt, die maximal 8A mit der beispielsweise im 565 Mbit/s-System erforderlichen Schnelligkeit ableiten können. Auch zeigte sich,

0126398

daß die Kapazitäten der Dioden 6, 7 das Übertragungsverhalten des Sendeverstärkers beeinträchtigen können.

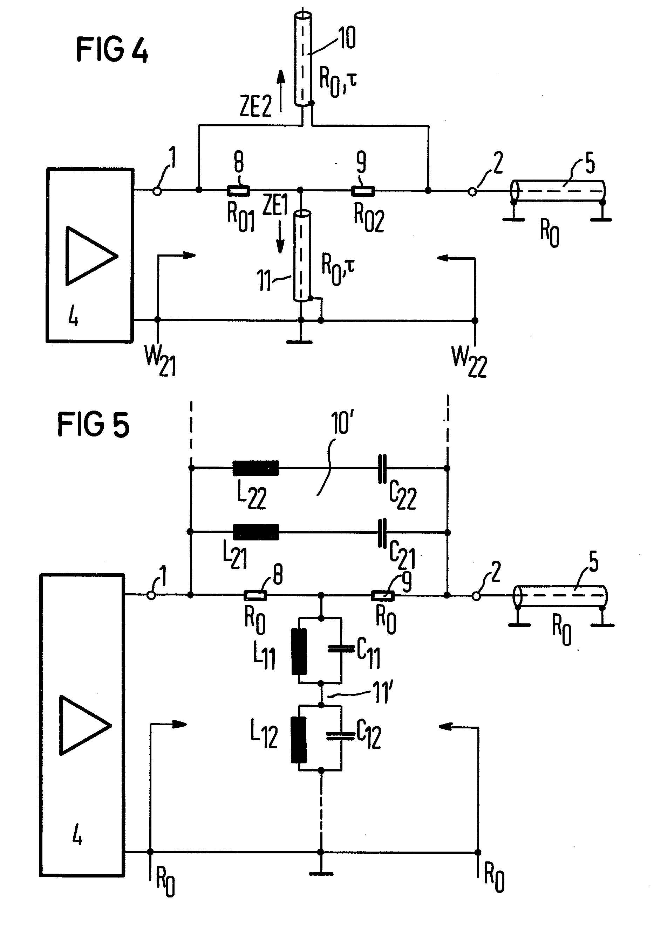

In der erfindungsgemäßen Schaltung nach Fig. 4 sind an
sich funktionsgleiche Elemente mit den gleichen Bezugsziffern bezeichnet. Zwischen dem Sendeverstärker 4 und
dem Signalkabel 5 liegt wiederum ein impulsformendes
Netzwerk, das die für einen AMI-Code geeigneten Eigenschaften haben muß. Dieses Netzwerk stellt ein überbrücktes T-Glied dar, dessen Eingangswiderstände mit $W_{21}$
bzw. mit $W_{22}$ bezeichnet sind. Das überbrückte T-Glied
besteht in den Längszweigen aus den Widerständen 8 und 9,
die gleichzeitig den Widerstandswert $R_{01}$ bzw. $R_{02}$ haben.
Im Querzweig der Schaltung liegt eine kurzgeschlossene
Leitung 11, deren Eingangswiderstand mit $Z_{E1}$ kenntlich
gemacht ist, die den Wellenwiderstand $R_0$ hat und bei der
ein darauf sich fortbewegendes Signal die Laufzeit $\tau$
aufweist. Im Überbrückungszweig liegt eine leerlaufende
Leitung 10, deren Eingangswiderstand mit $Z_{E2}$ bezeichnet
ist und die ebenfalls den Wellenwiderstand $R_0$ und die
Übertragungszeit $\tau$ hat. Die Leitungen 10 und 11 müssen
zueinander duale Eingangswiderstände haben, um den Entzerrerbedingungen gerecht zu werden.

In Fig. 5 ist nun eine Möglichkeit gezeigt, die leerlaufende Leitung 10 durch die Parallelschaltung einer
größeren Anzahl von Serienresonanzkreisen 10' und das
leerlaufende Kabel 11 durch eine Serienschaltung
größerer Anzahl von Parallelresonanzkreisen 11' zu ersetzen. Dabei bestehen diese Schaltungen aus konzentrierten Schaltelementen, deren Berechnung im einzelnen
noch gezeigt wird.

Die Impulsformung wird durch die Weichenschaltung gemäß
Fig. 4, die die kurzgeschlossenen und die leerlaufende
Leitung 10 enthält, erreicht. Die einseitig kurzgeschlossene Leitung 11 besitzt den Eingangswiderstand

$$Z_{E1} = R_0 \tanh p$$

mit dem Wellenwiderstand $R_0$ und der

Laufzeit $\tau$ .

Der Eingangswiderstand $Z_{E2}$ der leerlaufenden Leitung ist dual zu $Z_{E1}$

$$Z_{E2} = \frac{R_0^2}{Z_{E1}} = R_0 \coth p\tau \qquad (2)$$

Unter der Bedingung

$$R_{01} = R_{02} = R_0 \qquad (3)$$

und bei einem Sendeverstärker mit Innenwiderstand $R_0$ gilt für die Betriebswiderstände $W_{21}$ und $W_{22}$ des Netzwerkes bei allen Frequenzen

$$W_{21} = W_{22} = R_0. \qquad (4)$$

Abgesehen von einem vernachlässigbaren Rest wird die gesamte Leistung eines Überspannungspulses am Tor 2 der Schaltung in Fig. 4 im ohmschen Widerstand $R_{02}$ der Weiche verbraucht, so daß weitere Überspannungsschutzmaßnahmen an Tor 1, d.h. am Verstärkerausgang nicht nötig sind.

Die Eigenschaften der beiden Stichleitungen können mit Hilfe von Reaktanznetzwerken angenähert werden. Zu diesem Zweck kann z.B. der Eingangswiderstand $Z_{E1}$ der kurzgeschlossenen Stichleitung in Kettenbruch- oder Partialbruchform entwickelt werden. Die Realisierung des Eingangswiderstandes $Z_{E1}$ durch eine Partialbruchschaltung erscheint günstiger, da die entstehenden Resonanzkreise einzeln abstimmbar sind. Bekanntlich gilt

$$\tanh p\tau = \sum_{i=1}^{\infty} \frac{p\frac{2}{\tau}}{p^2 + \left[(2i-1)\frac{\pi}{2\tau}\right]^2} \qquad (5)$$

Die kurzgeschlossene Stichleitung wird durch die S rienschaltung von n Parallelschwingkreisen nachgebildet. Aus der Beziehung

$$\sum_{i=1}^{n} \frac{\dfrac{p}{C_{1i}}}{p^2 + \dfrac{1}{L_{1i} C_{1i}}} = \sum_{i=1}^{n} \frac{R_0 \, p \, \dfrac{2}{\tau}}{p^2 + \left[(2i-1) \dfrac{\pi}{2\tau}\right]^2} \tag{6}$$

erhält man die Bauelementwerte der Parallelschwingkreise zu

$$L_{1i} = \frac{8 R_0 \tau}{[(2i-1)\pi]^2} \tag{7}$$

und

$$C_{1i} = \frac{\tau}{2 R_0} \qquad (i = 1, \ldots, n)$$

Die leerlaufende Stichleitung wird durch die Parallelschaltung von n Serienschwingkreisen nachgebildet. Die Bauelementewerte berechnen sich aus den Gln. (3) und (7) zu

$$L_{2i} = \frac{R_0 \tau}{2}$$

und                                               (8)

$$C_{2i} = \frac{8\tau}{R_0 [(2i-1)\pi]^2} \qquad (i = 1, \ldots, n)$$

Bild 5 zeigt das Netzwerk bei Nachbildung der Stichleitungen durch Reaktanznetzwerke.

Ein Vergleich der bekannten und der erfindungsgemäßen Lösung zeigt folgendes.

Bei der bisher bekannten Schaltung nach Fig. 2 schwanken

die Eingangswiderstände $W_{11}$ und $W_{12}$ zwischen den Werten Null und Unendlich. Aus diesem Grunde wirken sich in der Nähe der Frequenzen, an denen der Eingangswiderstand $W_{11}$ nahezu einen Kurzschluß bildet, induktive Störungen und in der Nähe eines Leerlaufs kapazitive Störungen sehr ungünstig auf das Übertragungsverhalten des Sendeverstärkers aus, da dann Störreaktanzen in der Größenordnung des Eingangswiderstandes $W_{11}$ sind.

Bei den beschriebenen Netzwerken gemäß Fig. 4 und Fig. 5 ist der Sendeverstärker 4 mit einem über alle Frequenzen konstanten reellen Widerstand $R_0$ abgeschlossen. Störreaktanzen bewirken nur die Addition eines kleinen Imaginärteils in der komplexen Widerstandsebene und bleiben darum praktisch unwirksam.

Das Netzwerk gemäß Fig. 2 benötigt zur Erzeugung des AMI-Codes einen Sendeverstärker, der zumindest annähernd eine Stromquelle bildet. Diese Tatsache ist bei Verwendung von bipolaren Transistoren gegeben. Ein GaAs-Transistor besitzt jedoch bei einer Gateweite von $W \approx 400 \mu m$ die nötig ist, um einen Strom von ca. 50 mA in 75 $\Omega$ zu erzeugen, nur noch einen Ausgangswiderstand von 150 $\Omega$. Mit diesem Ausgangswiderstand ist es, wie weitere Untersuchungen ergeben haben, nicht möglich, das Netzwerk gemäß Fig. 2 zur Impulsformung zu verwenden.

Das neu vorgeschlagene Netzwerk erfüllte dagegen alle gestellten Forderungen. Ein Störimpuls gemäß Fig. 3 bewirkt in dem Netzwerk nach Fig. 2 in den Schutzdioden einen Strom von 20 A, beim Netzwerk nach Fig. 4 dagegen muß der Verstärker nur 14 mA aufnehmen.

2 Patentansprüche
5 Figuren

0126398

## Patentansprüche

1. Schaltungsanordnung zur Übertragung von digitalen, nach dem AMI-Code (Alternate Mark Inversion) codierten Signalen, bestehend aus einem Sendeverstärker (4), einem impulsformenden Netzwerk (R, C, 3) und einem der Signalübertragung dienenden Kabel (5), d a d u r c h g e k e n n z e i c h n e t , daß das impulsformende Netzwerk als überbrücktes T-Glied ausgebildet ist, in dessen beiden Längszweigen je ein ohmscher Widerstand (8, 9) liegt, in dessen Querzweig eine kurzgeschlossene Leitung (11) geschaltet ist, dessen Überbrückungszweig eine leerlaufende Leitung (10) mit zur kurzgeschlossenen Leitung (11) dualem Eingangswiderstand enthält, und dessen Dimensionierung in der Weise erfolgt, daß es die für den AMI-Code vorgegebene Impulsformung erzeugt.

2. Schaltungsanordnung nach Anspruch 1, d a d u r c h g e k e n n z e i c h n e t , daß die kurzgeschlossene bzw. leerlaufende Leitung (11, 10) durch Schaltungen aus konzentrierten Schaltelementen (11', 12') nachgebildet sind.

FIG 1a

FIG 1b

FIG 2

FIG 3

0126398

FIG 4

FIG 5

Europäisches
Patentamt

**EUROPÄISCHER RECHERCHENBERICHT**

0126398
Nummer der Anmeldung

EP 84 10 5371

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | GB-A-2 014 403 (SIEMENS) <br> * Seite 2, Zeilen 49-113; Figur 1 * <br><br> --- | 1 | H 04 L 25/49 |
| A | INSTRUMENTATION TECHNIQUES IN NUCLEAR PULSE ANALYSIS, 20. April - 3. Mai 1963, MONTEREY; PROCEEDINGS, NUCLEAR SCIENCE SERIES, Bericht, Nr. 40, 1964, National Academy of Sciences-National Research Council, Washington, USA; A.F. ARBEL: "Transistorized circuit modules for pulse height analysis", Seiten 79-88 * Seite 88; Figur A * <br><br> --- | 1 | |
| A,D | NACHRICHTENTECHNISCHE ZEITSCHRIFT, Band 32, Nr. 9, 1979, Seiten 608-611, Berlin, DE; H. BAUCH et al.: "Übertragung von 565-Mbit/s-Signalen über Koaxialkabel" * Seite 609, rechte Spalte, letzter Absatz; Seite 610, mittlere und rechte Spalte, Absatz "Schutz gegen Überspannungen und Dauerbeeinflussung; Zuverlässigkeit"; Figur 2 * <br><br> ----- | 1 | RECHERCHIERTE SACHGEBIETE (Int. Cl. 3) <br><br> H 04 L <br> H 03 K <br> G 11 B <br> H 04 B |

Der vorliegende Recherchenbericht wurde für alle Patentansprüche erstellt.

| Recherchenort | Abschlußdatum der Recherche | Prüfer |
|---|---|---|
| DEN HAAG | 09-08-1984 | GEISLER J.A.R. |